# EUROPEAN PATENT SPECIFICATION

(11) **EP 4 231 104 B1**
(45) Date of publication and mention of the grant of the patent: **01.04.2026**
(21) Application number: 22157845.3
(22) Date of filing: 21.02.2022
(51) Int. Cl.: G05B 19/408

(54) **INTERACTIVE PROPOSAL SYSTEM FOR DETERMINING A SET OF OPERATIONAL PARAMETERS FOR A MACHINE TOOL, CONTROL SYSTEM FOR A MACHINE TOOL, MACHINE TOOL AND METHOD FOR DETERMINING A SET OF OPERATIONAL PARAMETERS**
INTERAKTIVES VORSCHLAGSSYSTEM ZUR BESTIMMUNG EINES PARAMETERSATZES FÜR EINE WERKZEUGMASCHINE, STEUERUNGSSYSTEM FÜR EINE WERKZEUGMASCHINE, WERKZEUGMASCHINE UND VERFAHREN ZUR BESTIMMUNG EINES PARAMETERSATZES
SYSTÈME DE PROPOSITION INTERACTIF POUR DÉTERMINER UN ENSEMBLE DE PARAMÈTRES DE FONCTIONNEMENT POUR UNE MACHINE-OUTIL, SYSTÈME DE COMMANDE POUR UNE MACHINE-OUTIL, MACHINE-OUTIL ET PROCÉDÉ PERMETTANT DE DÉTERMINER UN ENSEMBLE DE PARAMÈTRES DE FONCTIONNEMENT

(43) Date of publication of application: 23.08.2023
(73) Proprietor: United Machining Solutions Management AG, 3014 Bern (CH)
(72) Inventor: PLÜSS, Christoph, 3400 Burgdorf (CH); DIERGARDT, Urs, 3006 Bern (CH); WÄFLER, Anton, 5400 Baden (CH); WEISS, Lukas, 8330 Pfäffikon (CH); RENGGLI, Philipp, 4153 Reinach (CH); SÜSSMAIER, Stefan, 8008 Zürich (CH)
(74) Representative: Arend, Christa

(56) References cited:
- CN-B- 106 557 072
- US-A1- 2010 228 363
- US-A1- 2020 171 671
- US-A1- 2021 150 081
- TOM B BROWN ET AL: "Adversarial Patch", ARXIV.ORG, CORNELL UNIVERSITY LIBRARY, 201 OLIN LIBRARY CORNELL UNIVERSITY ITHACA, NY 14853, 27 December 2017 (2017-12-27), XP081317018

## Description

The invention is directed to an interactive proposal system for determining a set of operational parameters for at least one machine tool.

Additionally, the invention relates to a control system for a machine tool, comprising such a proposal system.

Furthermore, the invention is directed to a machine tool, especially a grinding machine, which comprises such a control system.

The invention also relates to a method for determining a set of operational parameters for performing a job on at least one machine tool.

The determination of a set of operational parameters for a machine tool is a highly complex topic since these parameters are not only dependent on the job to be performed and corresponding economic targets such as a processing time. The operational parameters are also dependent on a state of the machine tool to be used and corresponding environmental conditions. Some of these parameters are only available in a non-formalized manner.

In this context, methods and systems for providing assistance in determining operational parameters are known.

US 2020/171671 A1 discloses a human augmented cloud-based robotics intelligence framework and associated methods, wherein a processor can be configured to make a probabilistic determination regarding the likelihood of successfully completing a particular user command. Moreover, CN 106557072 B discloses an auxiliary programming method for numerical control processing equipment execution program.

However, for obtaining an acceptable performance, these methods and systems are usually tailored to very specific application scenarios. Using such methods or systems for different. i.e. varying, application scenarios is either not possible or results in a drastically reduced performance. In other words, known methods and systems are not flexible and not adaptable to new or unknown manufacturing scenarios.

Consequently, it is an objective of the present invention to improve the flexibility and adaptability of methods and systems for determining operational parameters for machine tools.

The problem is solved by an interactive proposal system for determining a set of operational parameters for at least one machine tool. The proposal system comprises a first communication interface for receiving a job description describing a job to be performed by the at least one machine tool. The job to be performed concerns a desired transformation of a workpiece and corresponding target parameters. Moreover, the proposal system comprises a second communication interface for receiving at least one historic job description together with a corresponding set of historic operational parameters, a corresponding historic operator input, a corresponding parameter determination history, and a corresponding historic result assessment. The parameter determination history comprises a record of historic operational parameters that have been determined by the parameter determination unit, a corresponding order in which the historic operational parameters have been determined, and corresponding records concerning approval, rating and/or correction of the historic operational parameters. Furthermore, the proposal system comprises a parameter determination unit being communicatively connected to the first communication interface and to the second communication interface. The parameter determination unit is configured for determining a set of operational parameters for the performance of the job according to the received job description. The determination of the set of operational parameters is based on the received job description, the received at least one historic job description, the received set of historic operational parameters, the received historic operator input, the received parameter determination history, and the received historic result assessment. The proposal system also comprises a third communication interface for providing the determined set of operational parameters to an operator of the machine tool for review, rating and/or correction. The third communication interface is communicatively connected to the parameter determination unit. Additionally, the proposal system has a fourth communication interface being communicatively connected to the parameter determination unit. The fourth communication interface is configured for receiving an approval, rating and/or a correction of the determined set of operational parameters. Furthermore, the proposal system comprises a fifth communication interface for providing the determined set of operational parameters to an operation system of the machine tool. The fifth communication interface is communicatively connected to the parameter determination unit. Thus, the interactive proposal system is able to unite the advantages of a determination of the set of operational parameters by a human being and by a machine, more particularly a data processing means. The advantage of determining a set of operational parameters by a data processing means, i.e. the parameter determination unit, has the advantage that great amounts of historic data may be analyzed with high speed and high precision. In particular, the received at least one historic job description, the received set of historic operational parameters, the received historic operator input, the received parameter determination history, and the received historic result assessment are used. A human being having experience in determining operational parameters for a machine tool also has a memory of past operations and the corresponding sensations and perceptions. Moreover, the human brain is able to be creative. Additionally, a human being is able to recognize patterns based on his or her experiences. Using the proposal system, the human operator and the parameter determination unit can enter a sort of a dialogue, i.e. they interact in order to find the best set of operational parameters for a particular job to be performed. In doing so, the proposal system is highly flexible and highly adaptive such that it can be used for determining operational parameters for a wide variety of jobs to be performed. **In** a simplified notion, the proposal system and the operator work as a team. The team members have complementary skills and abilities. Consequently, this team is able to provide well-suitable operational parameters. Moreover, the team is very flexible and adaptable.

The general concept underlying the present invention is that the proposal system is able to provide a well-reasoned set of operational parameters for performing a particular job. This set of operational parameters is presented to a human operator who can approve, rate and/or correct these parameters. This may get forth and back between the proposal system and the operator several times. An alternative term for the set of operational parameters being provided or proposed by the proposal system is hypothesis or hypothetical parameters. Due to its interactive nature, the proposal system may be called a communication agent or an intelligent agent. It may be realized as a software agent. Nevertheless, the final decision and responsibility concerning the set of operational parameters will always be with the operator. This also means that the machine tool will not be operated in an autonomous manner. **In** this context, the operator may also define new parameters and may delete existing parameters.

A job to be performed by a machine tool not only covers the result to be achieved by the operation, i.e. the desired transformation of a workpiece, but also corresponding target parameters such as a time to finish, maximum tolerated wear of the machine tool, maximum tolerated temperature of a workpiece, and required tolerances. A workpiece transformation may comprise grinding a surface to a certain dimension while achieving a certain surface roughness. Also a state of the machine on which the job is to be performed is important. Consequently, two jobs which concern the same transformation of a workpiece and the same target parameters are considered to be different if they are to be performed on different machine tools or on the same machine tool being in different states, e.g. different states of wear.

Moreover, if not stated otherwise, an operational parameter is always to be understood as a function over time or a function over events. This means that an operational parameter may vary over time or vary due to the occurrence of events. The variation over time or over events may be determined by the proposal system of the present invention.

A parameter determination history comprises a complete record of parameters that have been determined by the parameter determination unit. Also a corresponding order in which the parameters have been determined is recorded. Furthermore, the parameter determination history comprises corresponding records concerning approval, rating and/or correction.

In this context, an operator input may concern so-called meta-parameters, i.e. parameters that are detected by the operator and not by a sensor of the machine tool. Such meta-parameters include but are not limited to: vibration, sound, damping pressure, interaction of coolant and grinding tool, splashing of coolant, color and color changes of part. These meta-parameters are very valuable for the determination of a set of adequate operational parameters since the effects that are detectable by the sensors of the machine tool are complemented. Consequently, the operational parameters to be used in the machine tool are improved. Once the operator has input one or more meta-parameter, the meta-parameter is available for the parameter determination unit as historic operator input.

As a general rule, history data being received by the second communication interface does not necessarily need to describe the history of the machine tool that is to perform the job being described by the job description. Also history data having been generated by other machine tools can be used.

It is further noted that the interactive proposal system may be attributed to one single machine tool. In this case, the interactive proposal system is configured for determining sets of operational parameters for operations being performed on this machine tool. Alternatively, the interactive proposal system may be attributed to two or more machine tools. This group of machine tools may be closed, i.e. fix, or open for expansion. In the latter case, the interactive proposal system is configured for determining sets of operational parameters for operations being performed each of these machine tools.

Independent from the number of attributed machine tools, the proposal system, which is a data processing system, may be physically located in or at one machine tool. It is clear that under this condition, data connections are required to all other machine tools being attributed to the proposal system. Alternatively, the proposal system may be located remote from all attributed machine tools. It is obvious that corresponding data connections are required between the proposal system and the corresponding machine tools. In the latter case, the proposal system may be a cloud installation or a cloud service.

It is further noted that the proposal system comprises a number of communication interfaces each serving a well-defined purpose. However, depending on the specific application scenario, these communication interfaces may also be realized as combined interfaces. For example, the third communication interface and the fourth communication interface may be realized by a combined input/output interface.

In an example, the third communication interface may be communicatively connected to the second communication interface. Moreover, the third communication interface may be configured for providing the received at least one historic job description together with a corresponding set of historic operational parameters, a corresponding historic operator input, a corresponding parameter determination history, and a corresponding historic result assessment to the operator. Consequently, the operator can use this information and take it into account when deciding on the approval, rating and/or correction of the determined operational parameters.

It is also possible that the third communication interface is communicatively connected to the first communication interface. Then, the third communication interface may be configured for providing the received job description to the operator. Thus, the operator is in a position to take into account the job description when deciding on the approval, rating and/or correction of the determined operational parameters.

It is also possible that the proposal system comprises a machine communication interface which is configured for receiving machine parameters, i.e. information about the machine and its tools, which need to be respected when determining the set of operational parameters. Thus, the determined operational parameters may be adapted to the state of the machine on which the job is to be performed.

According to an embodiment, the parameter determination unit comprises a probabilistic analysis unit being configured for probabilistically analyzing at least one of the received job description, the received at least one historic job description, the received set of historic operational parameters, the received at least one historic operator input, the received parameter determination history, and the received historic result assessment. The probabilistic analysis unit is configured for deriving therefrom a set of operational parameters for the performance of the job according to the received job description. This means that a set of operational parameters to be applied on the machine is generated by performing probabilistic analysis on the historic data. In this context, the probabilistic analysis may comprise describing the data to be analyzed in probabilistic or statistical terms, i.e. characterizing the data or sub-sets thereof by probabilistic or statistical indicators such as a mean value, median value, standard deviation, probability of occurrence. Based thereon, in order to derive the operational parameters, relations between the analyzed data elements need to be uncovered. Such relations may be expressed as probabilistic or statistical correlations. Also a probabilistic or statistical model may be derived. This model may be used for the actual determination of the set of operational parameters. It is noted that the proposal system and more particularly the parameter determination unit is configured for creating operational parameters for jobs that are new. In other words, the purpose is to derive potentially novel sets of operational parameters and not to determine which historic set of parameters would be the best fit. In doing so, a set of high quality operational parameters may be determined, wherein the operational parameters are well adapted to the job to be performed and the machine on which the job is to be performed.

It is noted that probabilistic methods and statistical methods have a certain overlap. **In** the present application, the term probabilistic analysis is to be understood as also comprising a statistical analysis and corresponding methods. The same applies to probabilistic analysis units and statistical analysis units, i.e. the probabilistic analysis unit is configured for executing statistical methods.

**In** an example, the probabilistic analysis unit comprises a machine learning unit for determining the set of operational parameters. The machine learning unit is configured for running a machine learning software. Moreover, the machine learning unit uses the received job description as an input and is configured for providing the set of operational parameters as an output. The machine learning unit learns from the history data by applying statistical or probabilistic methods. More precisely, the machine learning unit is configured for learning connections and relations between the received at least one historic job description, the received set of historic operational parameters, the received historic operator input, the received parameter determination history, and the received historic result assessment. This allows the machine learning unit to determine a set of operational parameters being suitable for the job according to the received job description. The operator input is used to further reduce a potential uncertainty that might be related to the set of operational parameters. Consequently, the proposal system is precise and reliable as well as highly flexible.

The machine learning unit may comprise an artificial neural network for determining the set of operational parameters. Since an artificial neural network is a specific form of networked chains of probabilities, an artificial neural network is considered one example of a probabilistic analysis unit and also one type of a machine learning unit. Of course, the artificial neural network is used in a trained state. This means that the artificial neural network has undergone training before being used. Such an artificial neural network uses the received job description as an input and the determined set of operational parameters as an output. The history data is used for the training of the artificial neural network and, thus, the historic data is implicitly stored in the artificial neural network. Nevertheless, it is inherent to artificial neural networks that the output is subject to a certain level of uncertainty. In the present invention, the operator input is used to further reduce this uncertainty. Consequently, the proposal system is precise and reliable as well as highly flexible.

In an example, a Bayesian neural networks is used for determining the set of operational parameters.

In an embodiment, the artificial neural network is a so-called explainable artificial neural network. Such artificial neural networks are characterized in that they are able to make transparent to an operator how an output has been generated, e.g. by a visualization or a textual or numeric description. Thus, the operator is able to enhance his or her knowledge and experience by the way the artificial neural network has produced an output. In simplified words, the operator can learn from the artificial neural network. As a consequence thereof, the operator's ability to determine operational parameters is enhanced.

According to a variant, the artificial neural network comprises a recurrent artificial neural network, i.e. a network comprising edges being oriented backwards and forming feedback loops. Such artificial neural networks are especially suitable for storing information since they have a sort of a memory. Consequently, operational parameters of high quality may be determined in an efficient manner.

It is noted that more than one artificial neural networks may be used. To this end, the received job description may be sub-divided into job elements or sub-tasks and for each job element or sub-task corresponding operational parameters are determined by using a specialized artificial neural network. Consequently, particularly well-adapted operational parameters may be determined.

According to an example, the parameter determination unit comprises a reliability unit being configured for attributing a confidence interval and/or an occurrence probability to at least one element of the set of determined operational parameters. Thus, at least one element of the set of determined parameters comes together with an information about its reliability. This helps the operator when performing the approval, rating and/or correction. If a set of parameters may be determined which offers a high reliability, this is noticeable for the operator. Also if the set of operational parameters can only be determined with a comparatively low reliability, the operator will be able to know that. Overall, the set of operational parameters may be determined in an efficient and target-oriented manner.

It is noted that the reliability unit may be a singular part of the determination unit. Alternatively, the reliability unit may be formed as a part of the probabilistic analysis unit.

It is also possible that the parameter determination unit comprises a logging unit being configured for documenting the determination of the set of operational parameters. In other words, the determination unit not only may have access to sets of operational parameters, but also to a corresponding determination history. In other words, a documentation about the way how the operational parameters are determined is generated. The documentation for example comprises an order of steps and the used basis for determining the respective parameter. Thus, the data basis for determining sets of adequate parameters is enhanced. This leads to an improved quality of the determined set of operational parameters.

In this context, the third communication interface may be communicatively connected to the parameter determination unit such that the content of the logging unit, i.e. the documentation of the determination of the set of operational parameters, can be provided to operator. This may enhance the understanding of the operator. Moreover, elements of the documentation may be rendered available for being rated and/or commented by the operator. Such a rating and/or comment will then be stored together with the respective element of the documentation.

In an embodiment, the proposal system may comprise a notification unit being communicatively connected to the first communication interface, to the second communication interface, and to the third communication interface. The notification unit may be configured for providing at least one notification concerning the performance of the job according to the received job description, based on the received job description, the received at least one historic job description, the received set of historic operational parameters, the received historic operator input, the received parameter determination history, and the received historic result assessment. **In** this context, a notification may concern adaptations and/or checks to be performed on the machine tool which is to perform the job according to the received job description. This kind of adaptations and/or checks may not be suitable for being handled by providing a set of operational parameters to the operation system of the machine tool and, thus, may have to be handled by the operator. Especially, the notification may comprise a warning, e.g. of a high level of wear of a tool. It is also possible that the notification comprises an information, e.g. a time to finish a job with the presently mounted tool. Alternatively or additionally, the notification may comprise a check request or a suggestion. The operator may be asked to check an orientation of a coolant nozzle. Also aspects of predictive maintenance may be covered by such check requests or suggestions. For example, an information may be provided that a time to finish a job will be reduced if a tool change is performed. Furthermore, the notification may comprise an abnormality that the proposal system has discovered, e.g. fluctuations of a motor power of an electric motor of the operation system of the machine tool. The operator, thus, is in a position to combine the content of the notification with his or her perceptions and may potentially recognize patterns or other relations. Overall, the notification unit has the effect that the machine tool can be configured such that it can perform the relevant job in an efficient and effective manner.

**In** an embodiment, the notification unit may be connected to a machine interface which is configured for receiving at least one parameter describing a current machine state. Thus, the current machine state may be respected for generating the notification. This leads to well-adapted and target-oriented notifications.

According to a variant, the parameter determination unit comprises an operator input evaluation unit being configured for evaluating an operator input. **In** other words, the parameter determination unit is configured for comparing an operator input to at least one historic job description together with a corresponding set of historic operational parameters, a corresponding historic operator input, a corresponding parameter determination history, and a corresponding historic result assessment. If the parameter determination unit comprises a probabilistic analysis unit, the operator input may also be compared to probabilistic analysis results being performed by this unit. The evaluation result may be fed back to the operator. Thus, the operator has a chance to correct its input and/or at least learn from the evaluation thereof. This may happen in one or more loops. Consequently, the input may be streamlined towards a suitable set of operational parameters.

Moreover, a proposal system comprising a parameter determination unit with an operator input evaluation unit may be used such that as a first step for determining the set of operational parameters for a job, the operator inputs a set of operational parameters that he or she considers appropriate. Thus, the dialogue or interaction between the operator and the proposal system may be started by the operator. This is an alternative to determining the set of operational parameters by the parameter determination unit as a first step.

In an example, the proposal system may comprise a performance evaluation unit being communicatively connected to the parameter determination unit and being configured for receiving a performance evaluation provided by the operator. Thus, the operator has the opportunity to evaluate the performance of the proposal system. As a consequence thereof, settings of the proposal system may be adapted. In other words, the operation of the proposal system may be individualized or personalized such that the operator's wishes are met. The performance evaluation may for example relate to the manner how information is presented to the operator. Corresponding settings may be adapted such that, e.g. a higher or lower information density is provided to the operator. Thus, the interaction between the operator and the proposal system may be rendered more efficient.

According to an embodiment, the parameter determination unit comprises a simulation unit being configured for simulating the performance of the job according to the received job description using the set of determined operational parameters. Thus, effects of the set of determined operational parameters may be known before actually using the set of operational parameters for operating the machine tool. The simulation may also be used for generating secondary parameters which for example are useful for assessing whether the determined set of operational parameters is suitable for reaching a predetermined target, e.g. a quality measure. Using the simulation unit, potential errors and undesired effects may be detected before the job is actually performed on the machine tool.

Additionally or alternatively, the proposal system may comprise a sixth communication interface being configured for receiving at least one job execution parameter from the operation system of the machine tool. The parameter determination unit may comprise a monitoring unit being communicatively connected to the sixth communication interface. The monitoring unit may be configured for comparing the job execution parameter to the set of determined operational parameters and/or to a simulation result being produced on the basis of the set of determined operational parameters. Thus, information describing an actual performance of a job on the machine tool may be fed back to the proposal system in the form of job execution parameters. Consequently, the proposal system may be used in in a closed control loop or feedback loop. As a consequence thereof, it is possible to detect situations in which the set of operational parameters need to be adapted. This may be the case during the execution of a job, for example if unexpected events happen, e.g. wear of tool. The monitoring unit may also suggest how to react to monitoring result, e.g. an unexpected event.

Additionally or alternatively, also the operator is in a position to perceive the execution of the job with his or her senses, e.g. listen to the execution of the job, hear the execution of the job or watch the execution of the job. A situation in which the operator supervises the execution of the job may be designated as human-in-the-loop. This is advantageous since the operator may be able to detect instabilities, deficiencies and inadequacies of the job execution that might not be detectable by a technical system. The parameters that may only be detected by a human being are also called meta-parameters. A human-in-the-loop configuration is essential for the execution of jobs where one or more meta-parameters are crucial for the successful completion.

In a case in which the operator wishes to adapt the execution of the job, he or she can stop or pause the execution of the job and correct one or more operational parameters. This may be done using the fourth communication interface. If a job is executed in a human-in-the-loop configuration, it has high chances to be successfully completed while fulfilling high quality standards.

The problem is also solved by a control system for a machine tool, comprising a proposal system according to the invention. A storage unit is communicatively connected to the second communication interface of the proposal system, the storage unit comprises at least one historic job description together with a corresponding set of historic operational parameters, a corresponding historic operator input, a corresponding parameter determination history, and a corresponding historic result assessment. Moreover, an output unit is communicatively connected to the third communication interface of the proposal system. The output unit is configured for providing a determined set of operational parameters to an operator of the machine tool. Moreover, an input unit is communicatively connected to the fourth communication interface of the proposal system. The input unit is configured for receiving an approval, rating and/or a correction of the determined set of operational parameters. A suitable set of operational parameters may be determined in an efficient and reliable manner when using such a control system. All necessary machine-readable data may be provided in the storage unit. The input unit and the output unit may be used for accessing an operator's knowledge and experience. The input of the operator comprises hints to his or her mental model of the machine tool and/or a process performed thereon. By transferring this input to the storage unit of the control system, it is at least partially transformed into data being available by the control unit. The combination of human knowledge and machine-readable history data renders the determination of a set of operational parameters precise, effective and flexible at the same time.

The output unit may be configured for generating a visual, acoustic and/or tactile output.

The input unit may be configured for receiving a speech input, a gesture input, tactile input and/or a text input.

A special form of an input that can be provided by the operator is a teaching input, i.e. the operator directly enters the operational parameters which are suitable from his or her perspective. This may also happen in a multi-step process, wherein the desired state is approached step by step. For the present application, a teaching input is considered to be an example of a correction of an operational parameter.

It is noted that not all parts of the control system need to be physically integrated into one assembly. It is especially sufficient, if the proposal system, the storage unit, the output unit and the input unit are networked with one another and the machine tool. **In** an example, the proposal system and the storage unit may be realized as cloud services. The input unit and the output unit may be formed by a smart phone or tablet computer.

In an example in which the set of operational parameters is large, the set may be sub-divided either into sub-sets being attributed to a part of the job, i.e. into sub-jobs or sub-tasks, or into sub-sets being attributed to components of the machine tool. In other words, the operational parameters may be clustered. Consequently, the parameters may be efficiently stored and/or processed.

The problem is additionally solved by a machine tool comprising a control system according to the invention. The control system is coupled to an operation system of the machine tool for controlling the operation of the machine tool. Such a machine tool offers a reliable and particularly flexible and adaptable way for determining a set of operational parameters for executing a job on the machine tool.

According to an embodiment, the machine tool is a grinding machine.

According to an embodiment, the operation system of the machine tool may comprise at least one process zone and at least one sensor unit being coupled to the process zone, wherein the sensor unit is connected to the proposal system of the control system, and wherein the proposal system, the process zone and the sensor unit form a closed feedback loop. Such a configuration is particularly suitable for determining a set of operational parameters for executing a job. Due to the feedback loop, the determination of the set of operational parameters is very robust, i.e. potential errors or deviations from desired states are detected and corrected in an appropriate manner. Thus, appropriate sets of operational parameters can be found for a great variety of jobs to be performed.

In a case in which the machine tool is used in a human-in-the-loop configuration as described above, the operator and the process zone also form a closed feedback loop, wherein the operator acts as a sensor and an actuator at the same time. Reference is made to the above explanations.

The problem is also solved by a method for determining a set of operational parameters for performing a job on at least one machine tool. The method comprises:
a) receiving a job description describing a job to be performed by the machine tool, wherein the job to be performed concerns a desired transformation of a workpiece and corresponding target parameters,
b) receiving at least one historic job description together with a corresponding set of historic operational parameters, a corresponding historic operator input, a corresponding parameter determination history, and a corresponding historic result assessment, wherein the parameter determination history comprises a record of historic operational parameters that have been determined by the parameter determination unit, a corresponding order in which the historic operational parameters have been determined, and corresponding records concerning approval, rating and/or correction of the historic operational parameters,
c) determining a set of operational parameters for the performance of the job according to the received job description, based on the received job description and the received at least one historic job description, the received set of historic operational parameters, the received historic operator input, the received parameter determination history, and the received historic result assessment, wherein an operator or a control system of the machine tool determines the set of operational parameters,
d) providing the determined set of operational parameters to the control system of the machine tool or the operator for approval, rating and/or correction,
e) receiving the control system's or the operator's approval, rating and/or correction of the determined set of operational parameters, and
f) providing the corrected, rated and/or approved set of operational parameters to an operation system of the machine tool.

Thus, the method unites the advantages of a determination of the set of operational parameters by a human being and by a machine, more particularly a data processing means. The advantage of determining a set of operational parameters by a data processing means is that great amounts of historic data may be analyzed with high speed and high precision. In particular, the received at least one historic job description, the received set of historic operational parameters, the received historic operator input, the received parameter determination history, and the received historic result assessment are used. A human being having experience in determining operational parameters for a machine tool also has a memory of past operations and the corresponding sensations and perceptions. Moreover, the human brain is able to be creative. Additionally, a human being is able to recognize patterns based on his or her experiences. Using the method, the human operator and the control system of the machine tool can enter a sort of a dialogue, i.e. they interact in order to find the best set of operational parameters for a particular job to be performed. In doing so, the method is highly flexible and highly adaptive such that it can be used for determining operational parameters for a wide variety of jobs to be performed. It is noted that a first step of the above-mentioned dialogue may be performed by the control system of the machine tool determining a set of operational parameters or may be performed by the operator inputting a set of operational parameters to the control system of the machine tool.

In an example, the method according to the present invention may be partly or fully computer-implemented.

In a further example, the method may comprise determining a confidence interval and/or an occurrence probability for at least one element of the set of determined operational parameters. Thus, at least one element of the set of determined parameters comes together with an information about its reliability. This helps the operator when performing the approval, rating and/or correction. Overall, a set of parameters may be determined which has a known reliability and, therefore, may be processed in an efficient and target-oriented manner.

Alternatively or additionally, the method may comprise providing determination details describing the determination of the set of operational parameters to the operator or to the machine. Thus, in addition to the set of operational parameters, a description of a way how the operational parameters have been determined is available. Thus, the reliability of the determined set of operational parameters may be assessed. Furthermore, the description of such a way may comprises learnings that can be used for improving the determination of operational parameters

It is also possible that the method comprises probabilistically analyzing at least one of the received job description, the received at least one historic job description, the received set of historic operational parameters, the received historic operator input, the received parameter determination history, and the received historic result assessment, for determining the set of operational parameters. This has already been explained in detail when describing the proposal system according to the invention. Thus, reference is made to the above explanations. Consequently, a set of high quality operational parameters may be determined, wherein the operational parameters are well adapted to the job to be performed and the machine on which the job is to be performed. As has also been explained in connection with the proposal system according to the invention, the probabilistic analysis may comprise the use of an artificial neural network. Reference is made to the above explanations.

The method may comprise monitoring the execution of the job being performed by the machine tool and informing the operator about a deviation of a job execution parameter describing the job execution with respect to the set of determined operational parameters and/or with respect to a simulation result. Thus, information describing an actual performance of a job on the machine tool may be fed back to the operator in the form of job execution parameters. Consequently, a closed control loop or feedback loop is generated. As a consequence thereof, it is possible to detect situations in which the set of operational parameters needs to be adapted. This may be the case during the execution of a job. Unexpected events, e.g. wear of tool, may be detected.

In another example, the method may comprise performing a test run of the at least one machine tool using the corrected, rated and/or approved set of operational parameters. Thus, potentially remaining uncertainties in connection with at least one element of the set of operational parameters may be mitigated or eliminated by the test run. Consequently, a reliable set of operational parameters may be determined.

Beyond that, all the effects and advantages that have been explained in connection with one of the interactive proposal system according to the present invention, the control system according to the invention, the machine tool according to the invention, and the method according to the invention also apply mutatis mutandis to all the others of the interactive proposal system according to the present invention, the control system according to the invention, the machine tool according to the invention, and the method according to the invention.

The different units and interfaces of the proposal system according to the present invention may be realized as corresponding assistants. Each assistant may comprise hardware components and software components. Moreover, each assistant may be configured to carry out one or more of the steps of the method according to the invention.

The software components of the assistants may be implemented as software agents.

Examples of the present invention will be described in the following with reference to the appended drawings.
- Figure 1: shows a machine tool according to the invention comprising a control system according to the invention, and an interactive proposal system according to the invention together with an operator, and

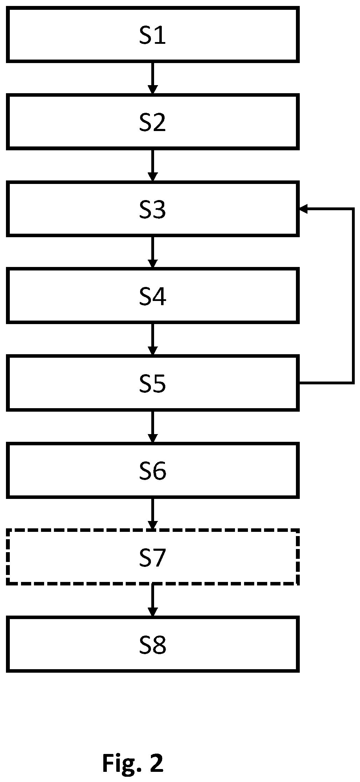

- Figure 2: illustrates steps of a method according to the invention.

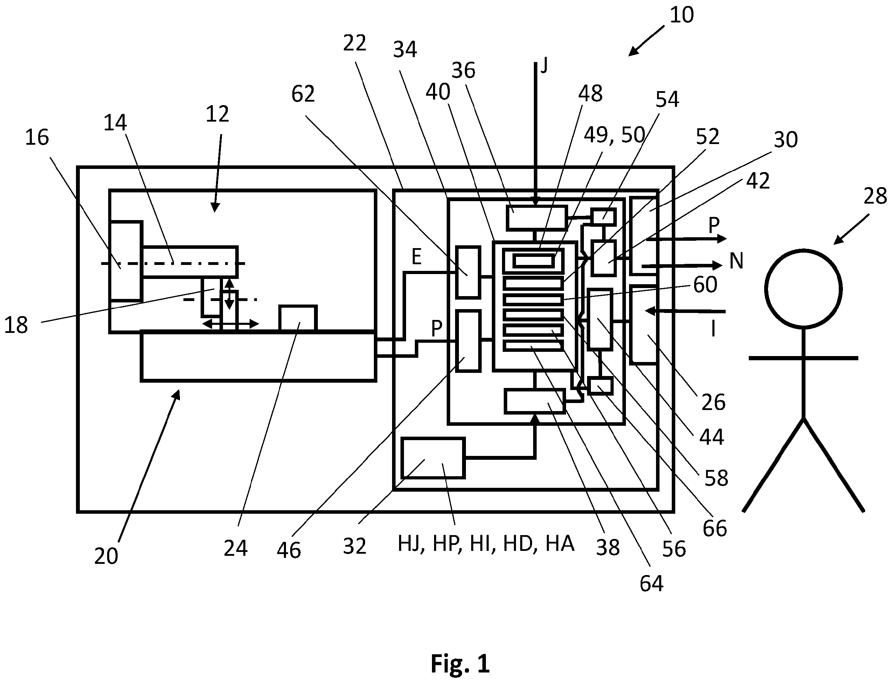

Figure 1 shows a machine tool 10.

In the example shown in the Figure, the machine tool 10 is a grinding machine.

The machine tool 10 comprises a process zone 12, wherein inside the process zone 12 a workpiece 14 to be treated by the machine tool 10 is located.

In the present example, the workpiece 14 is a shaft and it is supported in the process zone 12 by a chuck 16.

Moreover, a tool 18 is positioned within the process zone 12.

In the present example, the tool 18 is a grinding wheel.

The tool 18 is movably supported in the process zone 12 such that it can interact with the workpiece 14 in order to treat the workpiece 14.

The installations of the machine tool 10 being configured for performing an operation, e.g. moving the tool 18 form an operation system 20 of the machine tool 10.

The operation system 20 especially comprises drives and sensors of the machine tool 10.

The operation system 20 is coupled to a control system 22 which is configured for controlling the operation of the machine tool 10.

Moreover, a sensor unit 24 is arranged within the process zone 12.

The sensor unit 24 may comprise a temperature sensor being configured for detecting a temperature of an element being present in the process zone 12. Preferably, the temperature sensor is a wireless sensor.

Alternatively or additionally, the sensor unit 24 comprises a vibration sensor. Such a sensor may be configured for detecting audible or non-audible vibrations.

It is also possible that the sensor unit 24 comprises a sensor for detecting surface structures such as a surface roughness.

Moreover, the sensor unit 24 may be configured for detecting a geometric length of an element being present in the process zone 12. Thus, the sensor unit 24 may comprise a length sensor.

Furthermore, it is possible that the sensor unit 24 comprises a position sensor.

Alternatively or additionally, the sensor unit 24 may be an object detector, i.e. the sensor unit 24 may be configured for detecting an object within the process zone 12.

Furthermore, the sensor unit 24 may be configured for assessing a quality of a coolant. In this context, the sensor unit 24 may also be configured for classifying the detection result such that a current quality of the coolant can be classified.

In another alternative, the sensor unit 24 comprises a sensor for measuring a gas concentration and/or humidity within the process zone 12. This may be used for explosion protection.

It is understood that the sensor unit 24 may comprise any one or any combination of the sensors mentioned above.

The sensor unit 24 is represented schematically and is configured for detecting a sensor value characterizing a state within the process zone 12.

The sensor unit 24 is connected to the control system 22 via the operation system 20.

The control system 22 comprises an input unit 26 being configured for receiving an input I from an operator 28.

As will be explained in detail later, the input I may comprise an approval, rating and/or a correction of a determined set P of operational parameters.

Moreover, the control system 22 comprises an output unit 30.

The output unit 30 is configured for providing a set P of operational parameters to the operator 28.

In an example, the output unit 30 is configured for outputting feed rates of the different axes of the machine tool 10, a rotational speed of the workpiece 14, and a rotational speed of the tool 18.

In this context, the output unit 30 is configured for displaying an evolution of the above parameters over time. Optionally, also trends in the temporal evolution of these parameters may be shown.

The output unit 20 may also be able to output videos or images showing the workpiece 14 and/or the tool 18.

The output unit 30 may be formed as a dashboard showing different operational parameters and the corresponding evolution over time.

In such a dashboard, parameters may be selectively highlighted, e.g. if a parameter exceeds a predefined threshold.

It is also possible that the dashboard shows different parameters depending on the situation. This may comprise a certain prioritization and classification of the parameters.

Furthermore, the control system 22 comprises a storage unit 32 comprising at least one historic job description HJ together with a corresponding set of historic operational parameters HP, a corresponding historic operator input HI, a corresponding parameter determination history HD, and a corresponding historic result assessment HA.

In a very simple example, the historic result assessment HA comprises an information whether the quality of the workpiece was acceptable or not.

The control system 22 also has an interactive proposal system 34 for determining a set P of operational parameters for the machine tool 10.

The proposal system 34 has a first communication interface 36 which is configured for receiving a job description J describing a job to be performed by the machine tool 10.

The job description J may be received from a system external to the machine tool 10.

Moreover, the proposal system 34 has a second communication interface 38.

The storage unit 32 is communicatively connected to the second communication interface 38 such that the at least one historic job description HJ together with a corresponding set of historic operational parameters HP, a corresponding historic operator input HI, a corresponding parameter determination history HD, and a corresponding historic result assessment HA may be received by the proposal system 34.

The proposal system 34 also comprises a parameter determination unit 40.

The parameter determination unit 40 is communicatively connected to the first communication interface 36 and to the second communication interface 38.

Moreover, the proposal system 34 has a third communication interface 42, wherein the output unit 30 and the parameter determination unit 40 are communicatively connected to the third communication interface 42.

Thus, a set P of operational parameters being determined by the parameter determination unit 40 can be provided to the operator 28.

The proposal system 34 also has a fourth communication interface 44 which is communicatively connected to the parameter determination unit 40 and to the input unit 26.

Furthermore, the proposal system 34 has a fifth communication interface 46 which is communicatively connected to the parameter determination unit 40 and the operation system 20 of the machine tool 10.

The fifth communication interface 46 is configured for providing the determined set P of operational parameters to the operation system 20.

The parameter determination unit 40 is configured for determining a set P of operational parameters for the performance of the job according to the received job description J.

The determination of the set of operational parameters is based on the job description J which may be received via the first communication interface 36.

Moreover, the determination of the set P of operational parameters is based on the received at least one historic job description HJ, the received set of historic operational parameters HP, the received historic operator input HI, the received parameter determination history HD, and the received historic result assessment HA. This data is received from the storage unit 32 via the second communication interface 38.

The parameter determination unit comprises a probabilistic analysis unit 48 which comprises a machine learning unit 49 having an artificial neural network 50.

The set P of operational parameters is determined by the probabilistic analysis unit 48, more precisely by the artificial neural network 50.

To this end, the artificial neural network 50 has been trained by data being provided by the storage unit 32, i.e. at least one historic job description HJ, the received set of historic operational parameters HP, the received at least one historic operator input HI, the received parameter determination history HD, and the received historic result assessment HA.

Consequently, when using the received job description J as an input, the artificial neural network 50 is configured for determining a set of operational parameters.

Moreover, the parameter determination unit 40 comprises a reliability unit 52 which is configured for attributing a confidence interval to the elements of the set P of determined operational parameters.

The set P of operational parameters together with the corresponding confidence intervals may be provided to the operator via the third communication interface 42 and the output unit 30.

For parameters relating to a position or to a geometric length, a confidence interval may be expressed by a maximum deviation around a desired value, e.g. +/- 100 nm or +/- 1000 nm.

The maximum deviation may for example depend on a temperature and/or on the fact whether the machine tool 10 is in a thermally stable regime or not.

Moreover, the reliability unit 52 may be configured for clustering parameters such that an operator is in a position to consider influences and dependencies between the parameters.

Additionally, the proposal system 34 comprises a notification unit 54 which is communicatively connected to the first communication interface 36, to the second communication interface 38, and to the third communication interface 42.

The notification unit 54 is configured for providing at least one notification N concerning the performance of the job according to the received job description J, based on the received job description J, the received at least one historic job description HJ, the received set of historic operational parameters HP, the received historic operator input HI, the received parameter determination history HD, and the received historic result assessment HA.

The notification N is provided to the operator 28 vita the output unit 30.

In a very simple example, the set of operational parameters P comprises a rotational speed for the tool 18, a rotational speed for the workpiece 14 and a feed rate.

The notification N may comprise a reminder to properly orient a nozzle for coolant onto the workpiece 14 or to generally check the coolant system for deficiencies, e.g. obstructions.

In a case in which a very valuable workpiece 14 is to be produced, the notification N may comprise a reminder to regularly check the process zone 12 for abnormalities during the execution of the job. In such a case, the notification N may also comprise a scheme of recommended process interruptions.

In a case in which a high number of identical workpieces 14 is to be produced, the notification N may comprise a reminder to regularly check a sample workpiece during the execution of the job.

Moreover, the notification N can comprise an aggregated information on historic jobs being similar to the job to be performed or comprising similar process steps. The notification N may for example comprise a diagram showing historic jobs or historic process steps and a corresponding average duration.

In a case in which the job to be performed requires a high accuracy, the notification N may comprise the information that the operator should wait until the machine tool 10 is in a thermally stable regime. Additionally, an estimation of the waiting time may be provided.

In a case in which a comparatively low accuracy is required, the notification N may comprise an information that the job can be performed right after starting the machine tool 10, i.e. in a thermally non-stable regime.

In a case in which a job to be performed comprises certain process steps which need to be performed with high accuracy and other process steps which only require a comparatively low accuracy, the notification N may comprise an information that the operator should start with the process steps requiring a comparatively low accuracy only.

Furthermore, it is possible that the notification N comprises an information on how to efficiently perform the setup of the machine tool 10 before starting the job execution.

The parameter determination unit 40 also comprises a simulation unit 56 being configured for simulating the performance of the job according to the received job description J using the set P of determined operational parameters. Thus, a kind of a test of the set P of parameters being determined by the artificial neural network 50 may be performed.

Using the simulation unit 56, information on the possibility to execute the job on the present machine tool 10 with the present tool 18 can be generated. In other words, using the simulation unit 56, a check is performed whether the job can be performed on the present machine tool 10. The result can be presented in the form of a red, yellow or green traffic light.

Moreover, using the simulation unit 56, a time for the execution of a job can be estimated. The same is true for a time for setup.

Also estimations concerning resource consumption, e.g. coolant or electricity, can be generated. Based thereon, costs for executing the job can be estimated.

Furthermore, using the simulation unit 56, risks concerning the quality of the workpiece can be assessed and/or eliminated, e.g. a collision risk.

In a case in which the job to be performed comprises process steps that must not be interrupted, the simulation unit 56 may be used for determining minimal requirements for starting such process steps. The minimal requirements may relate to a wear state of the tool 18.

As has been mentioned before in connection with the input unit 26, the operator 28 may provide an input I concerning the set P of operational parameters. The input I may comprise an approval, a rating and/or a correction.

Using again the very simple example, such a correcting may concern at least one of the rotational speed for the tool 18, the rotational speed for the workpiece 14 and the feed rate.

However, the input I is not directly fed back to the probabilistic analysis unit 48. Rather the input is fed to an operator input evaluation unit 58 being configured for evaluating an operator input I.

It is noted that based on the input I of the operator 28, the parameter determination unit 40 may determine a new set P of operational parameters which again may be provided to the operator 28.

Thus, a sort of a dialogue may be established between the parameter determination unit 40 and the operator 28.

This dialogue is documented. To this end, the parameter determination unit 40 comprises a logging unit 60 being configured for documenting the determination of the set P of operational parameters. The logged data may be transferred to the storage unit 32 and stored as parameter determination history HD.

The proposal system 34 is not only used before the actual execution of the job according to the job description J.

Rather, the proposal system 34 is also used during the execution of the job according to the job description J.

To this end, the proposal system 34 comprises a sixth communication interface 62.

The sixth communication interface 62 is communicatively connected to the operation system 20 of the machine tool 10 and especially to the sensor unit 24.

The sixth communication interface 62 is configured for receiving at least one job execution parameter E.

The job execution parameter E may for example be determined by the sensor unit 24 or by any other element of the operation system 20. In this case, the job execution parameter E may relate to any one of the parameters being detectable by the sensor unit 24 as has been described above.

Moreover, the parameter determination unit 40 comprises a monitoring unit 64 being communicatively connected to the sixth communication interface 62.

The monitoring unit 64 is configured for comparing the job execution parameter E to the set P of determined operational parameters and/or to a simulation result being produced on the basis of the set P of determined operational parameters.

Thus, an undesired development during the execution of the job can be detected.

Based thereon, the set P of operational parameters may be amended.

Thus, the proposal system 34, the process zone 12 and the sensor unit 24 form a closed feedback loop.

In the example shown in the Figures, the proposal system 34 also has a performance evaluation unit 66 which is communicatively connected to the parameter determination unit 40 and to the input unit 26 via the fourth communication interface 44.

The performance evaluation unit 66 is configured for receiving a performance evaluation provided by the operator 28. In other words, the operator 28 can cause an adaptation of the settings of the parameter determination unit 40.

These settings for example relate to tools being preferred by the operator.

Additionally or alternatively, the settings may relate to an amount of details being used in an output of the output unit. The operator can adapt the settings such that more or less details are provided.

When using the machine tool 10 for treating the workpiece 14, the set P of operational parameters may be determined using a method for determining a set P of operational parameters.

In a first step S1, the job description J describing the job to be performed by the machine tool 10 is received at the first communication interface 36.

Moreover, in a second step S2, at least one historic job description HJ together with a corresponding set of historic operational parameters HP, a corresponding historic operator input HI, a corresponding parameter determination history HD, and a corresponding historic result assessment HA is received at the second communication interface 38.

Thereafter, in a third step S3, the parameter determination unit 40 is used for determining a set P of operational parameters for the performance of the job according to the received job description J.

In the present example, this step is performed by the probabilistic analysis unit 48 having an artificial neural network 50.

The set P of operational parameters is determined on the basis of the received job description J and the received at least one historic job description HJ, the received set of historic operational parameters HP, the received historic operator input HI, the received parameter determination history HD, and the received historic result assessment HA.

More precisely, at least one of the received job description J, the received at least one historic job description HJ, the received set of historic operational parameters HP, the received historic operator input HI, the received parameter determination history HD, and the received historic result assessment HA is probabilistically analyzed for determining the set P of operational parameters.

The historic data is provided by the storage unit 32 via the second communication interface 38.

In the present example, the artificial neural network 50 has been trained using the historic data.

Consequently, using the job description J as an input, the artificial neural network 50 is able to provide a set P of operational parameters as an output.

Also the reliability unit 52 is used and for each element of the set P of operational parameters, a confidence interval is calculated.

Subsequently, in a fourth step S4, the determined set P of operational parameters is provided to the operator 28 together with the confidence intervals.

Moreover, determination details describing the determination of the set P of operational parameters are provided to the operator 28.

In a fifth step S5, the operator's 28 input is received.

More precisely, the operator 28 provides an approval, rating and/or correction of the determined set P of operational parameters. This is provided to the parameter determination unit 40 via the input unit 26 and the third communication interface 42.

Depending on the type of the input I, the method may jump back to the third step S3 and determine a new set P of operational parameters.

The third step S3, the fourth step S4 and the fifth step S5 may be performed in one or more loops until the operator 28 fully approves the set P of operational parameters.

Then, a sixth step S6 is performed and the corrected, rated and/or approved set P of operational parameters is provided to an operation system 20 of the machine tool 10.

Thereafter, in an optional seventh step S7, a test run of the at least one machine tool 10 may be performed using the corrected, rated and/or approved set P of operational parameters.

After that, the job according to the received job description J is executed on the machine tool 10.

During the execution of the job, in an eighth step S8, the execution is monitored.

This means that the operator 28 is informed about a deviation of a job execution parameter describing the job execution with respect to the set P of determined operational parameters and/or with respect to a simulation result.

Such a deviation may be detected using the sensor unit 24. The operator 28 may be informed using the output unit 30.

It is noted that in the present example, the parameter determination unit 40 determines a set P of operational parameters which is then provided to the operator 28. In an alternative, it is also possible that the operator 28 inputs a set of operational parameters which is then evaluated by the proposal system 34. In this case, the proposal system 34 provides an approval, rating and/or correction to the operator 28.

In order to further illustrate the proposal system 34 for determining a set P of operational parameters for the machine tool 10 and the corresponding method, two use cases will be described.

In a first use case the job description J relates to a job has already been performed on the machine tool 10 a long time ago.

In this case, the proposal system 34 will be able to retrieve the record corresponding to this job from the storage unit 32. Consequently, the parameter determination unit 40 can generate an adequate set P of operational parameters and the reliability unit 52 calculates the highest possible reliability of the elements of the set P of operational parameters.

The operator 28 is able to see this high reliability using the output unit 30. He or she is also in a position to access the storage unit 32 and have a look at the record corresponding to the earlier performed job.

In a case in which the job description J is incomplete, it can be complemented using the corresponding historic job description HJ. The added elements may be equipped with lower reliability indicators such that the operator 28 has an incitation to check these.

In a second use case the job according to the received job description J is in the process of being executed on the machine tool.

However, a discrepancy is detected between an actual job execution parameter E and a desired operational parameter.

Using the probabilistic analysis unit 48 correlations of the historic operational parameters corresponding to the desired operational parameters and other operational parameters may be calculated and the five parameters having the highest correlation may be provided to the operator via the output unit 30. Thus, the operator is in a position to efficiently search for the reason of the discrepancy by checking these parameters first.

### List of reference signs

- 10: machine tool
- 12: process zone
- 14: workpiece
- 16: chuck
- 18: tool
- 20: operation system
- 22: control system
- 24: sensor unit
- 26: input unit
- 28: operator
- 30: output unit
- 32: storage unit
- 34: proposal system
- 36: first communication interface
- 38: second communication interface
- 40: parameter determination unit
- 42: third communication interface
- 44: fourth communication interface
- 46: fifth communication interface
- 48: probabilistic analysis unit
- 49: machine learning unit
- 50: artificial neural network
- 52: reliability unit
- 54: notification unit
- 56: simulation unit
- 58: operator input evaluation unit
- 60: logging unit
- 62: sixth communication interface
- 64: monitoring unit
- 66: performance evaluation unit

- E: job execution parameter
- HJ: historic job description
- HP: historic operational parameters
- HI: historic operator input
- HD: parameter determination history
- HA: historic result assessment
- I: operator input
- J: job description
- N: notification
- P: set of operational parameters
- S1: first step
- S2: second step
- S3: third step
- S4: fourth step
- S5: fifth step
- S6: sixth step
- S7: seventh step
- S8: eighth step

## Claims

1. Interactive proposal system (34) for determining a set (P) of operational parameters for at least one machine tool (10), the proposal system (34) comprising
a first communication interface (36) for receiving a job description (J) describing a job to be performed by the at least one machine tool (10), wherein the job to be performed concerns a desired transformation of a workpiece and corresponding target parameters,
a second communication interface (38) for receiving at least one historic job description (HJ) together with a corresponding set of historic operational parameters (HP), a corresponding historic operator input (HI), a corresponding parameter determination history (HD), and a corresponding historic result assessment (HA), wherein the parameter determination history (HD) comprises a complete record of operational parameters that have been determined by a parameter determination unit (40), a corresponding order in which the operational parameters have been determined, and corresponding records concerning approval, rating and/or correction of the operational parameters,
the parameter determination unit (40) being communicatively connected to the first communication interface (36) and to the second communication interface (38), and being configured for determining a set (P) of operational parameters for the performance of the job according to the received job description (J), based on the received job description (J), the received at least one historic job description (HJ), the received set of historic operational parameters (HP), the received historic operator input (HI), the received parameter determination history (HD), and the received historic result assessment (HA),
a third communication interface (42) for providing the determined set (P) of operational parameters to an operator (28) of the machine tool (10) for review, rating and/or correction, the third communication interface (42) being communicatively connected to the parameter determination unit (40),
a fourth communication interface (44) being communicatively connected to the parameter determination unit (40), wherein the fourth communication interface (44) is configured for receiving an approval, rating and/or a correction of the determined set (P) of operational parameters, and
a fifth communication interface (46) for providing the determined set (P) of operational parameters to an operation system (20) of the machine tool (10), the fifth communication interface (46) being communicatively connected to the parameter determination unit (40).

2. Proposal system (34) of claim 1, wherein the parameter determination unit (40) comprises a probabilistic analysis unit (48) being configured for probabilistically analyzing at least one of the received job description (J), the received at least one historic job description (HJ), the received set of historic operational parameters (HP), the received at least one historic operator input (HI), the received parameter determination history (HD), and the received historic result assessment (HA), and being configured for deriving therefrom a set (P) of operational parameters for the performance of the job according to the received job description (J).

3. Proposal system (34) of claim 2, wherein the probabilistic analysis unit (48) comprises a machine learning unit (49) for determining the set (P) of operational parameters.

4. Proposal system (34) of claim 3, wherein the machine learning unit (49) comprises an artificial neural network (50) for determining the set (P) of operational parameters.

5. Proposal system (34) of any one of the preceding claims, wherein the parameter determination unit (40) comprises a reliability unit (52) being configured for attributing a confidence interval and/or an occurrence probability to at least one element of the set (P) of determined operational parameters.

6. Proposal system (34) of any one of the preceding claims, wherein the parameter determination unit (40) comprises a logging unit (60) being configured for documenting the determination of the set (P) of operational parameters.

7. Proposal system (34) of any one of the preceding claims, comprising a notification unit (54) being communicatively connected to the first communication interface (36), to the second communication interface (38), and to the third communication interface (42), and being configured for providing at least one notification (N) concerning the performance of the job according to the received job description (J), based on the received job description (J), the received at least one historic job description (HJ), the received set of historic operational parameters (HP), the received historic operator input (HI), the received parameter determination history (HD), and the received historic result assessment (HA).

8. Proposal system (34) of any one of the preceding claims, wherein the parameter determination unit (40) comprises an operator input evaluation unit (58) being configured for evaluating an operator input (I).

9. Proposal system (34) of any one of the preceding claims, comprising a performance evaluation unit (66) being communicatively connected to the parameter determination unit (40) and being configured for receiving a performance evaluation provided by the operator (28).

10. Proposal system (34) of any one of the preceding claims, wherein the parameter determination unit (40) comprises a simulation unit (56) being configured for simulating the performance of the job according to the received job description (J) using the set (P) of determined operational parameters.

11. Proposal system (34) of any one of the preceding claims, comprising a sixth communication interface (62) being configured for receiving at least one job execution parameter (E) from the operation system (20) of the machine tool (10), wherein the parameter determination unit (40) comprises a monitoring unit (64) being communicatively connected to the sixth communication interface (62), the monitoring unit (64) being configured for comparing the job execution parameter (E) to the set (P) of determined operational parameters and/or to a simulation result being produced on the basis of the set (P) of determined operational parameters.

12. Control system (22) for a machine tool (10), comprising a proposal system (34) according to any one of the preceding claims,
wherein a storage unit (32) is communicatively connected to the second communication interface (38) of the proposal system (34), the storage unit (32) comprising at least one historic job description (HJ) together with a corresponding set of historic operational parameters (HP), a corresponding historic operator input (HI), a corresponding parameter determination history (HD), and a corresponding historic result assessment (HA),
wherein an output unit (30) is communicatively connected to the third communication interface (42) of the proposal system (34), the output unit (30) being configured for providing a determined set (P) of operational parameters to an operator (28) of the machine tool (10), and
wherein an input unit (26) is communicatively connected to the fourth communication interface (44) of the proposal system (34), the input unit (26) being configured for receiving an approval, rating and/or a correction of the determined set (P) of operational parameters.

13. Machine tool (10), especially grinding machine, comprising a control system (22) according to claim 12 being coupled to an operation system (20) of the machine tool (10) for controlling the operation of the machine tool (10).

14. Machine tool of claim 13, wherein the operation system (20) of the machine tool (10) comprises at least one process zone (12) and at least one sensor unit (24) being coupled to the process zone (12), wherein the sensor unit (24) is connected to the proposal system (34) of the control system (22), and wherein the proposal system (34), the process zone (12) and the sensor unit (24) form a closed feedback loop.

15. Method for determining a set (P) of operational parameters for performing a job on at least one machine tool (10), comprising:
a) receiving a job description (J) describing a job to be performed by the machine tool (10) (S1), wherein the job to be performed concerns a desired transformation of a workpiece and corresponding target parameters,
b) receiving at least one historic job description (HJ) together with a corresponding set of historic operational parameters (HP), a corresponding historic operator input (HI), a corresponding parameter determination history (HD), and a corresponding historic result assessment (HA) (S2), wherein the parameter determination history (HD) comprises a complete record of historic operational parameters (HP) that have been determined by a parameter determination unit (40), a corresponding order in which the historic operational parameters (HP) have been determined, and corresponding records concerning approval, rating and/or correction of the historic operational parameters (HP),
c) determining a set (P) of operational parameters for the performance of the job according to the received job description (J), based on the received job description (J) and the received at least one historic job description (HJ), the received set of historic operational parameters (HP), the received historic operator input (HI), the received parameter determination history (HD), and the received historic result assessment (HA), wherein an operator (28) or a control system (22) of the machine tool (10) determines the set (P) of operational parameters (S3),
d) providing the determined set (P) of operational parameters to the control system (22) of the machine tool (10) or the operator (10) for approval, rating and/or correction (S4),
e) receiving the control system's (22) or the operator's (28) approval, rating and/or correction of the determined set (P) of operational parameters (S5), and
f) providing the corrected, rated and/or approved set (P) of operational parameters to an operation system (20) of the machine tool (10) (S6).

16. Method according to claim 15, comprising: determining a confidence interval and/or an occurrence probability for at least one element of the set (P) of determined operational parameters.

17. Method according to claim 15 or 16, comprising: providing determination details describing the determination of the set (P) of operational parameters to the operator (28) or to the machine tool (10).

18. Method according to any one of claims 15 to 17, comprising: probabilistically analyzing at least one of the received job description (J), the received at least one historic job description (HJ), the received set of historic operational parameters (HP), the received historic operator input (HI), the received parameter determination history (HD), and the received historic result assessment (HA), for determining the set (P) of operational parameters.

19. Method according to any one of claims 15 to 18, comprising: monitoring the execution of the job to be performed by the machine tool (10) and informing the operator (28) about a deviation of a job execution parameter (E) describing the job execution with respect to the set (P) of determined operational parameters and/or with respect to a simulation result (S8).

20. Method according to any one of claims 15 to 19, comprising: performing a test run of the at least one machine tool (10) using the corrected, rated and/or approved set (P) of operational parameters (S7).

## Patentansprüche

1. Interaktives Vorschlagsystem (34) zum Bestimmen eines Satzes (P) von Betriebsparametern für mindestens eine Werkzeugmaschine (10), wobei das Vorschlagsystem (34) Folgendes umfasst:
eine erste Kommunikationsschnittstelle (36) zum Empfangen einer Auftragsbeschreibung (J), die einen von der mindestens einen Werkzeugmaschine (10) durchzuführenden Auftrag beschreibt, wobei der durchzuführende Auftrag eine gewünschte Transformation eines Werkstücks und entsprechende Zielparameter betrifft,
eine zweite Kommunikationsschnittstelle (38) zum Empfangen mindestens einer historischen Auftragsbeschreibung (HJ) zusammen mit einem entsprechenden Satz historischer Betriebsparameter (HP), einer entsprechenden historischen Bedienereingabe (HI), einer entsprechenden Parameterbestimmungshistorie (HD) und einer entsprechenden historischen Ergebnisbeurteilung (HA), wobei die Parameterbestimmungshistorie (HD) einen vollständigen Datensatz von Betriebsparametern, die von einer Parameterbestimmungseinheit (40) bestimmt wurden, eine entsprechende Reihenfolge, in der die Betriebsparameter bestimmt wurden, und entsprechende Datensätze umfasst, die die Genehmigung, Bewertung und/oder Korrektur der Betriebsparameter betreffen;
die Parameterbestimmungseinheit (40), die kommunikativ mit der ersten Kommunikationsschnittstelle (36) und mit der zweiten Kommunikationsschnittstelle (38) verbunden und zum Bestimmen eines Satzes (P) von Betriebsparametern für die Durchführung des Auftrags gemäß der empfangenen Auftragsbeschreibung (J) basierend auf der empfangenen Auftragsbeschreibung (J), der empfangenen mindestens einen historischen Auftragsbeschreibung (HJ), dem empfangenen Satz historischer Betriebsparameter (HP), der empfangenen historischen Bedienereingabe (HI), der empfangenen Parameterbestimmungshistorie (HD) und der empfangenen historischen Ergebnisbeurteilung (HA) konfiguriert ist,
eine dritte Kommunikationsschnittstelle (42) zum Bereitstellen des bestimmten Satzes (P) von Betriebsparametern an einen Bediener (28) der Werkzeugmaschine (10) zur Überprüfung, Bewertung und/oder Korrektur, wobei die dritte Kommunikationsschnittstelle (42) kommunikativ mit der Parameterbestimmungseinheit (40) verbunden ist,
eine vierte Kommunikationsschnittstelle (44), die kommunikativ mit der Parameterbestimmungseinheit (40) verbunden ist, wobei die vierte Kommunikationsschnittstelle (44) zum Empfangen einer Genehmigung, Bewertung und/oder einer Korrektur des bestimmten Satzes (P) von Betriebsparametern konfiguriert ist, und
eine fünfte Kommunikationsschnittstelle (46) zum Bereitstellen des bestimmten Satzes (P) von Betriebsparametern an ein Betriebssystem (20) der Werkzeugmaschine (10), wobei die fünfte Kommunikationsschnittstelle (46) kommunikativ mit der Parameterbestimmungseinheit (40) verbunden ist.

2. Vorschlagsystem (34) nach Anspruch 1, wobei die Parameterbestimmungseinheit (40) eine Einheit zur probabilistischen Analyse (48) umfasst, die zum probabilistischen Analysieren mindestens einer von der empfangenen Auftragsbeschreibung (J) , der empfangenen mindestens einen historischen Auftragsbeschreibung (HJ), dem empfangenen Satz historischer Betriebsparameter (HP), der empfangenen mindestens einen historischen Bedienereingabe (HI), der empfangenen Parameterbestimmungshistorie (HD) und der empfangenen historischen Ergebnisbeurteilung (HA) konfiguriert ist und zum Ableiten eines Satzes (P) von Betriebsparametern daraus für die Durchführung des Auftrags gemäß der empfangenen Auftragsbeschreibung (J) konfiguriert ist.

3. Vorschlagsystem (34) nach Anspruch 2, wobei die Einheit zur probabilistischen Analyse (48) eine Einheit für maschinelles Lernen (49) zum Bestimmen des Satzes (P) von Betriebsparametern umfasst.

4. Vorschlagsystem (34) nach Anspruch 3, wobei die Einheit für maschinelles Lernen (49) ein künstliches neuronales Netzwerk (50) zum Bestimmen des Satzes (P) von Betriebsparametern umfasst.

5. Vorschlagsystem (34) nach einem der vorhergehenden Ansprüche, wobei die Parameterbestimmungseinheit (40) eine Zuverlässigkeitseinheit (52) umfasst, die zum Zuordnen eines Konfidenzintervalls und/oder einer Auftrittswahrscheinlichkeit zu mindestens einem Element des Satzes (P) der bestimmten Betriebsparametern konfiguriert ist.

6. Vorschlagsystem (34) nach einem der vorhergehenden Ansprüche, wobei die Parameterbestimmungseinheit (40) eine Protokollierungseinheit (60) umfasst, die zum Dokumentieren der Bestimmung des Satzes (P) von Betriebsparametern konfiguriert ist.

7. Vorschlagsystem (34) nach einem der vorhergehenden Ansprüche, umfassend eine Benachrichtigungseinheit (54), die kommunikativ mit der ersten Kommunikationsschnittstelle (36), der zweiten Kommunikationsschnittstelle (38) und der dritten Kommunikationsschnittstelle (42) verbunden und zum Bereitstellen mindestens einer Benachrichtigung (N) konfiguriert ist, die die Durchführung des Auftrags gemäß der empfangenen Auftragsbeschreibung (J) basierend auf der empfangenen Auftragsbeschreibung (J), der empfangenen mindestens einen historischen Auftragsbeschreibung (HJ), dem empfangenen Satz historischer Betriebsparameter (HP), der empfangenen historischen Bedienereingabe (HI), der empfangenen Parameterbestimmungshistorie (HD) und der empfangenen historischen Ergebnisbeurteilung (HA) betrifft.

8. Vorschlagsystem (34) nach einem der vorhergehenden Ansprüche, wobei die Parameterbestimmungseinheit (40) eine Bedienereingabe-Evaluationseinheit (58) umfasst, die zum Evaluieren einer Bedienereingabe (I) konfiguriert ist.

9. Vorschlagsystem (34) nach einem der vorhergehenden Ansprüche, umfassend eine Durchführungsevaluationseinheit (66), die kommunikativ mit der Parameterbestimmungseinheit (40) verbunden und zum Empfangen einer Durchführungsevaluation konfiguriert ist, die von dem Bediener (28) bereitgestellt wird.

10. Vorschlagsystem (34) nach einem der vorhergehenden Ansprüche, wobei die Parameterbestimmungseinheit (40) eine Simulationseinheit (56) umfasst, die zum Simulieren der Durchführung des Auftrags gemäß der empfangenen Auftragsbeschreibung (J) unter Verwendung des Satzes (P) der bestimmten Betriebsparameter konfiguriert ist.

11. Vorschlagsystem (34) nach einem der vorhergehenden Ansprüche, umfassend eine sechste Kommunikationsschnittstelle (62), die zum Empfangen mindestens eines Auftragsausführungsparameters (E) von dem Betriebssystem (20) der Werkzeugmaschine (10) konfiguriert ist, wobei die Parameterbestimmungseinheit (40) eine Überwachungseinheit (64) umfasst, die kommunikativ mit der sechsten Kommunikationsschnittstelle (62) verbunden ist, wobei die Überwachungseinheit (64) zum Vergleichen des Auftragsausführungsparameters (E) mit dem Satz (P) der bestimmten Betriebsparameter und/oder mit einem Simulationsergebnis konfiguriert ist, das auf der Basis des Satzes (P) der bestimmten Betriebsparameter erzeugt wird.

12. Steuersystem (22) für eine Werkzeugmaschine (10), umfassend ein Vorschlagsystem (34) nach einem der vorhergehenden Ansprüche,
wobei eine Speichereinheit (32) kommunikativ mit der zweiten Kommunikationsschnittstelle (38) des Vorschlagsystems (34) verbunden ist, wobei die Speichereinheit (32) mindestens eine historische Auftragsbeschreibung (HJ) zusammen mit einem entsprechenden Satz historischer Betriebsparameter (HP), einer entsprechenden historischen Bedienereingabe (HI), einer entsprechenden Parameterbestimmungshistorie (HD) und einer entsprechenden historischen Ergebnisbeurteilung (HA) umfasst,
wobei eine Ausgabeeinheit (30) kommunikativ mit der dritten Kommunikationsschnittstelle (42) des Vorschlagsystems (34) verbunden ist, wobei die Ausgabeeinheit (30) zum Bereitstellen eines bestimmten Satzes (P) von Betriebsparametern an einen Bediener (28) der Werkzeugmaschine (10) konfiguriert ist, und
wobei eine Eingabeeinheit (26) kommunikativ mit der vierten Kommunikationsschnittstelle (44) des Vorschlagsystems (34) verbunden ist, wobei die Eingabeeinheit (26) zum Empfangen einer Genehmigung, einer Bewertung und/oder einer Korrektur des bestimmten Satzes (P) der Betriebsparameter konfiguriert ist.

13. Werkzeugmaschine (10), insbesondere Schleifmaschine mit einem Steuersystem (22) nach Anspruch 12, das mit einem Betriebssystem (20) der Werkzeugmaschine (10) zum Steuern des Betriebs der Werkzeugmaschine (10) gekoppelt ist.

14. Werkzeugmaschine nach Anspruch 13, wobei das Betriebssystem (20) der Werkzeugmaschine (10) mindestens eine Prozesszone (12) und mindestens eine Sensoreinheit (24) umfasst, die mit der Prozesszone (12) gekoppelt sind, wobei die Sensoreinheit (24) mit dem Vorschlagsystem (34) des Steuersystems (22) verbunden ist und wobei das Vorschlagsystem (34), die Prozesszone (12) und die Sensoreinheit (24) eine geschlossene Rückkopplungsschleife bilden.

15. Verfahren zur Bestimmung eines Satzes (P) von Betriebsparametern zum Durchführen eines Auftrags an mindestens einer Werkzeugmaschine (10), umfassend:
a) Empfangen einer Auftragsbeschreibung (J), die einen von der Werkzeugmaschine (10) durchzuführenden Auftrag beschreibt (S1), wobei der durchzuführende Auftrag eine gewünschte Transformation eines Werkstücks und entsprechende Zielparameter betrifft,
b) Empfangen mindestens einer historischen Auftragsbeschreibung (HJ) zusammen mit einem entsprechenden Satz historischer Betriebsparameter (HP), einer entsprechenden historischen Bedienereingabe (HI), einer entsprechenden Parameterbestimmungshistorie (HD) und einer entsprechenden historischen Ergebnisbeurteilung (HA) (S2), wobei die Parameterbestimmungshistorie (HD) einen vollständigen Datensatz historischer Betriebsparameter (HP), die von einer Parameterbestimmungseinheit (40) bestimmt wurden, eine entsprechende Reihenfolge, in der die historischen Betriebsparameter (HP) bestimmt wurden, und entsprechende Datensätze umfasst, die die Genehmigung, Bewertung und/oder Korrektur der historischen Betriebsparameter (HP) betreffen;
c) Bestimmen eines Satzes (P) von Betriebsparametern für die Durchführung des Auftrags gemäß der empfangenen Auftragsbeschreibung (J) basierend auf der empfangenen Auftragsbeschreibung (J) und der empfangenen mindestens einen historischen Auftragsbeschreibung (HJ), dem empfangenen Satz historischer Betriebsparameter (HP), der empfangenen historischen Bedienereingabe (HI), der empfangenen Parameterbestimmungshistorie (HD) und der empfangenen historischen Ergebnisbeurteilung (HA), wobei ein Bediener (28) oder ein Steuersystem (22) der Werkzeugmaschine (10) den Satz (P) von Betriebsparametern bestimmt (S3),
d) Bereitstellen des bestimmten Satzes (P) von Betriebsparametern für das Steuersystem (22) der Werkzeugmaschine (10) oder den Bediener (10) zur Genehmigung, Bewertung und/oder Korrektur (S4),
e) Empfangen der Genehmigung, Bewertung und/oder Korrektur des Steuersystems (22) oder des Bedieners (28) hinsichtlich des bestimmten Satzes (P) von Betriebsparametern (S5) und
f) Bereitstellen des korrigierten, bewerteten und/oder genehmigten Satzes (P) von Betriebsparametern an ein Betriebssystem (20) der Werkzeugmaschine (10) (S6).

16. Verfahren nach Anspruch 15, umfassend: Bestimmen eines Konfidenzintervalls und/oder einer Auftrittswahrscheinlichkeit für mindestens ein Element des Satzes (P) der bestimmten Betriebsparameter.

17. Verfahren nach Anspruch 15 oder 16, umfassend: Bereitstellen von Bestimmungsdetails, die die Bestimmung des Satzes (P) von Betriebsparametern beschreiben, an den Bediener (28) oder die Werkzeugmaschine (10).

18. Verfahren nach einem der Ansprüche 15 bis 17, umfassend: probabilistisches Analysieren mindestens einer von der empfangenen Auftragsbeschreibung (J), der empfangenen mindestens einen historischen Auftragsbeschreibung (HJ), dem empfangenen Satz historischer Betriebsparameter (HP), der empfangenen historischen Bedienereingabe (HI), der empfangenen Parameterbestimmungshistorie (HD) und der empfangenen historischen Ergebnisbeurteilung (HA) zum Bestimmen des Satzes (P) von Betriebsparametern.

19. Verfahren nach einem der Ansprüche 15 bis 18, umfassend: Überwachen der Ausführung des von der Werkzeugmaschine (10) durchzuführenden Auftrags und Informieren des Bedieners (28) über eine Abweichung eines Auftragsausführungsparameters (E), der die Auftragsausführung in Bezug auf den Satz (P) der bestimmten Betriebsparameter und/oder in Bezug auf ein Simulationsergebnis (S8) beschreibt.

20. Verfahren nach einem der Ansprüche 15 bis 19, umfassend: Durchführen eines Testlaufs der mindestens einen Werkzeugmaschine (10) unter Verwendung des korrigierten, bewerteten und/oder genehmigten Satzes (P) von Betriebsparametern (S7).

## Revendications

1. Système de proposition interactif (34) pour déterminer un ensemble (P) de paramètres de fonctionnement pour au moins une machine-outil (10), le système de proposition (34) comprenant :
une première interface de communication (36) pour recevoir une description de travail (J) décrivant un travail à effectuer par l'au moins une machine-outil (10), le travail à effectuer concernant la transformation souhaitée d'une pièce à usiner et les paramètres cibles correspondants,
une deuxième interface de communication (38) destinée à recevoir au moins une description de travail historique (HJ) conjointement avec un ensemble correspondant de paramètres de fonctionnement historiques (HP), une entrée d'opérateur historique correspondante (HI), un historique de détermination de paramètres correspondant (HD) et une évaluation de résultats historiques correspondante (HA), où l'historique de détermination de paramètres (HD) comprend un enregistrement complet des paramètres de fonctionnement qui ont été déterminés par une unité de détermination de paramètres de fonctionnement (40), un ordre correspondant dans lequel les paramètres de fonctionnement ont été déterminés, et les registres correspondants concernant l'approbation, la qualification et/ou la correction des paramètres de fonctionnement,
l'unité de détermination de paramètres (40) étant connectée de manière communicante à la première interface de communication (36) et à la deuxième interface de communication (38), et étant configurée pour déterminer un ensemble (P) de paramètres de fonctionnement pour l'exécution du travail en fonction de la description de travail reçue (J), sur la base de la description de travail reçue (J), de la description de travail historique reçue (HJ), de l'ensemble de paramètres de fonctionnement historiques reçu (HP), de l'entrée d'opérateur historique reçue (HI), de l'historique de détermination de paramètres reçu (HD) et de l'évaluation de résultats historiques reçue (HA),
une troisième interface de communication (42) pour fournir l'ensemble (P) déterminé de paramètres de fonctionnement à un opérateur (28) de la machine-outil (10) pour revue, évaluation et/ou correction, la troisième interface de communication (42) étant connectée de manière communicante à l'unité de détermination de paramètres (40),
une quatrième interface de communication (44) étant connectée de manière communicante avec l'unité de détermination de paramètres (40), la quatrième interface de communication (44) étant configurée pour recevoir une approbation, une quantification et/ou une correction de l'ensemble déterminé (P) de paramètres de fonctionnement, et
une cinquième interface de communication (46) pour fournir l'ensemble déterminé (P) de paramètres de fonctionnement à un système d'exploitation (20) de la machine-outil (10), la cinquième interface de communication (46) étant connectée de manière communicante à l'unité de détermination de paramètres (40).

2. Système de proposition (34) selon la revendication 1, dans lequel l'unité de détermination de paramètres (40) comprend une unité d'analyse probabiliste (48) configurée pour analyser sur un plan probabiliste au moins l'un des éléments parmi la description de travail reçue (J), l'au moins une description de travail historique reçue (HJ), l'ensemble reçu de paramètres de fonctionnement historiques (HP), l'au moins une entrée d'opérateur historique reçue (HI), l'historique de détermination de paramètres reçu (HD) et l'évaluation de résultats historiques reçue (HA), et étant configurée pour en dériver un ensemble (P) de paramètres de fonctionnement pour l'exécution du travail en fonction de la description de travail reçue (J).

3. Système de proposition (34) selon la revendication 2, dans lequel l'unité d'analyse probabiliste (48) comprend une unité d'apprentissage automatique (49) pour déterminer l'ensemble (P) de paramètres de fonctionnement.

4. Système de proposition (34) selon la revendication 3, dans lequel l'unité d'apprentissage automatique (49) comprend un réseau de neurones artificiels (50) pour déterminer l'ensemble (P) de paramètres de fonctionnement.

5. Système de proposition (34) selon l'une quelconque des revendications précédentes, dans lequel l'unité de détermination de paramètres (40) comprend une unité de fiabilité (52) configurée pour attribuer un intervalle de confiance et/ou une probabilité d'occurrence à au moins un élément de l'ensemble (P) de paramètres de fonctionnement déterminés.

6. Système de proposition (34) selon l'une quelconque des revendications précédentes, dans lequel l'unité de détermination de paramètres (40) comprend une unité d'enregistrement (60) configurée pour documenter la détermination de l'ensemble (P) de paramètres de fonctionnement.

7. Système de proposition (34) selon l'une quelconque des revendications précédentes, comprenant une unité de notification (54) étant connectée de manière communicante à la première interface de communication (36), à la deuxième interface de communication (38), et à la troisième interface de communication (42), et étant configurée pour fournir au moins une notification (N) concernant l'exécution du travail selon la description de travail reçue (J), sur la base de la description de travail reçue (J), de l'au moins une description de travail historique reçue (HJ), de l'ensemble de paramètres de fonctionnement historiques reçu (HP), de l'entrée d'opérateur historique reçue (HI), de l'historique de détermination de paramètres reçu (HD) et de l'évaluation de résultats historiques reçue (HA).

8. Système de proposition (34) selon l'une quelconque des revendications précédentes, dans lequel l'unité de détermination de paramètres (40) comprend une unité d'évaluation d'entrée d'opérateur (58) étant configurée pour évaluer une entrée d'opérateur (I).

9. Système de proposition (34) selon l'une quelconque des revendications précédentes, comprenant une unité d'évaluation de performance (66) étant connectée de manière communicante à l'unité de détermination de paramètres (40) et étant configurée pour recevoir une évaluation de performance fournie par l'opérateur (28).

10. Système de proposition (34) selon l'une quelconque des revendications précédentes, dans lequel l'unité de détermination de paramètres (40) comprend une unité de simulation (56) étant configurée pour simuler la performance du travail en fonction de la description de travail reçue (J) en utilisant l'ensemble (P) de paramètres de fonctionnement déterminés.

11. Système de proposition (34) selon l'une quelconque des revendications précédentes, comprenant une sixième interface de communication (62) étant configurée pour recevoir au moins un paramètre d'exécution de travail (E) du système opérationnel (20) de la machine-outil (10), où l'unité de détermination de paramètres (40) comprend une unité de surveillance (64) étant connectée de manière communicante à la sixième interface de communication (62), L'unité de surveillance (64) étant configurée pour comparer le paramètre d'exécution du travail (E) à l'ensemble (P) de paramètres de fonctionnement déterminés et/ou à un résultat de simulation produit sur la base de l'ensemble (P) de paramètres de fonctionnement déterminés.

12. Système de commande (22) d'une machine-outil (10) comprenant un système de proposition (34) selon l'une quelconque des revendications précédentes,
dans lequel une unité de stockage (32) est connectée de manière communicante à la deuxième interface de communication (38) du système de proposition (34), l'unité de stockage (32) comprenant au moins une description de travail historique (HJ) conjointement avec un ensemble correspondant de paramètres de fonctionnement historiques (HP), une entrée d'opérateur historique correspondante (HI), un historique de détermination de paramètres correspondants (HD) et une évaluation de résultats historiques correspondante (HA),
dans lequel une unité de sortie (30) est connectée de manière communicative à la troisième interface de communication (42) du système de proposition (34), l'unité de sortie (30) étant configurée pour fournir un ensemble déterminé (P) de paramètres de fonctionnement à un opérateur (28) de la machine-outil (10), et
dans lequel une unité d'entrée (26) est connectée de manière communicante à la quatrième interface de communication (44) du système de proposition (34), l'unité d'entrée (26) étant configurée pour recevoir une approbation, une quantification et/ou une correction de l'ensemble déterminé (P) de paramètres de fonctionnement.

13. Machine-outil (10), en particulier machine à meuler, comprenant un système de commande (22) selon la revendication 12, couplé à un système de fonctionnement (20) de la machine-outil (10) pour commander le fonctionnement de la machine-outil (10).

14. Machine-outil selon la revendication 13, dans laquelle le système de fonctionnement (20) de la machine-outil (10) comprend au moins une zone de traitement (12) et au moins une unité de détection (24) couplée à la zone de traitement (12), l'unité de détection (24) étant reliée au système de proposition (34) du système de commande (22), et dans laquelle le système de proposition (34), la zone de traitement (12) et l'unité de détection (24) forment une boucle de rétroaction fermée.

15. Procédé de détermination d'un ensemble (P) de paramètres de fonctionnement d'exécution d'un travail sur au moins une machine-outil (10), le procédé comprenant les étapes suivantes :
a) recevoir une description de travail (J) décrivant un travail à effectuer par la machine-outil (10) (S1), le travail à effectuer concernant une transformation souhaitée d'une pièce à usiner et des paramètres cibles correspondants,
b) recevoir au moins une description de travail historique (HJ) avec un ensemble correspondant de paramètres de fonctionnement historiques (HP), une entrée d'opérateur historique correspondante (HI), un historique de détermination de paramètres correspondant (HD) et une évaluation de résultats historiques correspondante (HA) (S2), l'historique de détermination de paramètres (HD) comprenant un enregistrement complet des paramètres de fonctionnement historiques (HP) qui ont été déterminés par une unité de détermination de paramètres (40), un ordre correspondant dans lequel les paramètres de fonctionnement historiques (HP) ont été déterminés, et les registres correspondants concernant l'approbation, la quantification et/ou la correction des paramètres de fonctionnement historiques (HP),
c) déterminer un ensemble (P) de paramètres de fonctionnement pour l'exécution du travail conformément à la description de travail reçue (J), sur la base de la description de travail reçue (J) et de l'au moins une description de travail historique reçue (HJ), de l'ensemble reçu de paramètres de fonctionnement historiques (HP), de l'entrée d'opérateur historique reçue (HI), de l'historique reçu de détermination de paramètres (HD), et de l'évaluation de résultats historiques (HA) reçue, où un opérateur (28) ou un système de commande (22) de la machine-outil (10) détermine l'ensemble (P) de paramètres de fonctionnement (S3),
d) fournir l'ensemble déterminé (P) de paramètres de fonctionnement au système de commande (22) de la machine-outil (10) ou à l'opérateur (10), pour approbation, quantification et/ou correction (S4),
e) recevoir l'approbation, la qualification et/ou la correction du jeu déterminé (P) de paramètres de fonctionnement (S5) du système de commande (22) ou de l'exploitant (28), et
f) fournir l'ensemble corrigé, quantifié et/ou approuvé (P) de paramètres de fonctionnement à un système d'exploitation (20) de la machine-outil (10) (S6).

16. Procédé selon la revendication 15, comprenant de déterminer un intervalle de confiance et/ou une probabilité d'occurrence pour au moins un élément de l'ensemble (P) de paramètres de fonctionnement déterminés.

17. Procédé selon la revendication 15 ou 16, comprenant de fournir des détails de détermination décrivant la détermination de l'ensemble (P) de paramètres de fonctionnement à l'opérateur (28) ou à la machine-outil (10).

18. Procédé selon l'une quelconque des revendications 15 à 17, comprenant d'analyse sur le plan probabiliste au moins un élément parmi la description de travail reçue (J), l'au moins une description de travail historique reçue (HJ), l'ensemble de paramètres de fonctionnement historiques reçu (HP), l'entrée d'opérateur historique reçue (HI), l'historique de détermination de paramètres reçu (HD) et l'évaluation de résultats historiques reçue (HA), pour déterminer l'ensemble (P) de paramètres de fonctionnement.

19. Procédé selon l'une quelconque des revendications 15 à 18, comprenant de surveiller l'exécution du travail à exécuter par la machine-outil (10) et d'informer l'opérateur (28) d'un écart d'un paramètre d'exécution de travail (E) décrivant l'exécution du travail par rapport à l'ensemble (P) de paramètres de fonctionnement déterminés et/ou par rapport à un résultat de simulation (S8).

20. Procédé selon l'une quelconque des revendications 15 à 19, comprenant d'exécuter un essai de l'au moins une machine-outil (10) en utilisant l'ensemble (P) corrigé, quantifié et/ou approuvé de paramètres de fonctionnement (S7).
